# EUROPEAN PATENT APPLICATION

(11) **EP 3 888 907 A1**
(43) Date of publication of application: **06.10.2021**
(21) Application number: 19905547.6
(22) Date of filing: 14.11.2019
(51) Int. Cl.: B32B 15/01

(54) **CORROSION-RESISTANT MARINE COMPOSITE STEEL PLATE AND MANUFACTURING METHOD THEREFOR**

(30) Priority: 26.12.2018 CN 201811602617
(71) Applicant: BAOSHAN IRON & STEEL CO., LTD., Shanghai 201900 (CN)
(72) Inventor: LIANG, Xiaojun, Shanghai 201900 (CN); JIAO, Sihai, Shanghai 201900 (CN); DING, Jianhua, Shanghai 201900 (CN); YUAN, Xiangqian, Shanghai 201900 (CN); SHI, Qing, Shanghai 201900 (CN); LAI, Wanxiao, Shanghai 201900 (CN); ZHANG, Suoquan, Shanghai 201900 (CN); WANG, Zhiyu, Shanghai 201900 (CN); HAO, Yingmin, Shanghai 201900 (CN); TAO, Xiaoyong, Shanghai 201900 (CN)
(74) Representative: Maiwald Patent- und Rechtsanwaltsgesellschaft mbH
(86) International application number: PCT/CN2019/118515
(87) International publication number: WO 2020/134675

(57) **Abstract**

Disclosed are a corrosion-resistant marine composite steel plate and a manufacturing method therefor. The corrosion-resistant composite steel plate has a two-layer structure, wherein one layer is duplex stainless steel, and the other layer is marine carbon steel; said duplex stainless steel comprises the following components by weight: C≤0.03%, Mn≤2.00%, Si≤1.00%, Cr: 21.0-23.0%, Ni: 4.5-6.5%, Mo: 2.5-3.5%, N: 0.08-0.20%, P≤0.02%, S≤0.025%, and the balance being Fe and inevitable impurities; and said marine carbon steel comprises the following components by weight: 0.03%≤C≤0.13%, Si≤0.50%, Mn: 0.90-1.60%, P≤0.020%, S≤0.025%, Cu≤0.035%, Cr≤0.20%, Ni≤0.40%, Nb: 0.02-0.05%, Ti≤0.02%, Mo ≤0.08%, Al≥0.015%, and the balance being Fe and inevitable impurities. A rolled composite steel plate is produced by using a double-barrier vacuum assembly method, so that a reduction in structure weight is achieved while a good structural strength and an excellent corrosion resistance are obtained

## Description

### TECHNICAL FIELD

The present invention belongs to the technical field of corrosion-resistant composite steel plate production, and in particular, relates to a corrosion-resistant marine composite steel plate and a manufacturing method therefor.

### BACKGROUND

Under a severe medium environment such as seawater with high chlorine ion content, a flue gas duct with complicated medium components, a petroleum and natural gas pipeline with a temperature and a pressure as well as a container for transporting chemicals, a stainless steel material with excellent corrosion resistance is required to be selected. Due to high Cr, Mo and N contents, high pitting corrosion equivalent and high yield strength 2-3 times as high as that of ordinary austenite stainless steel, duplex stainless steel is suitable for an application to a material having requirements on structural strength and corrosion resistance. However, due to relatively high contents of alloys such as Ni and Mo and higher technical production difficulty, the duplex stainless steel is relatively high in use cost.

Adopted is a design thought of a composite steel plate, a structural strength and toughness can be guaranteed by material design, that is, carbon steel serving as a base layer is adopted as a main material, and thus, requirements on different strengths and toughness can be met; and the corrosion resistance of the material is achieved by a stainless steel cladding layer. Therefore, the composite steel plate is capable of achieving advantages of the two materials at the same time. Moreover, due to the design of the composite steel plate, a larger-sized composite steel plate can be provided, weld seams for splicing steel plates can be reduced, and a risk brought by partial failure in a weld seam process is reduced. In addition, the design of the composite steel plate is adopted, an original weld seam requiring for butting carbon steel and stainless steel becomes a weld seam for the carbon steel and carbon steel of the composite steel plate, or the carbon steel and the composite steel plate are welded as a whole, a main fusion welding material is still a carbon steel material, and therefore, not only can the cost be reduced, but also the welding quality is easier to control. The production efficiency can be increased.

A Chinese patent CN107379671A discloses an explosive cladding and rolling method of a 2205 duplex stainless steel composite steel plate. A Chinese patent CN105772507A discloses a production method of a carbon steel and duplex stainless steel composite steel plate, in which a vacuum rolling method is adopted, and a single closed system is formed inside after edge sealing. A Chinese patent CN108246825A discloses a preparation method of a TMCP marine duplex stainless steel composite steel plate, in which a vacuum slab assembly process similar to that in the Chinese patent CN105772507A is adopted, but differing in: the adopted is a vacuum electron beam slab assembly process. For the both processes, a single vacuum system can be formed, and therefore, a bond strength of the overall composite slab can be lowered or bond failure can be caused as long as individual weld seams are failed.

### SUMMARY

An objective of the present invention is to provide a corrosion-resistant marine composite steel plate and a manufacturing method therefor, by which a reduction in structure weight is achieved while a good structural strength and an excellent corrosion resistance are obtained. Moreover, the composite steel plate is a rolled composite steel plate capable of realizing interatomic metallurgical bonding, thereby achieving a good bonding force between a cladding layer and a base layer.

In order to achieve the above-mentioned objective, the present invention proposes the technical solutions as follows:
The present invention provides a double-barrier vacuum slab assembly method for producing a rolled composite steel plate, and the method is particularly suitable for producing a composite steel plate with relatively high material cost and high composite quality requirements.

Specifically, the corrosion-resistant marine composite steel plate provided by the present invention, which has a two-layer structure, wherein one layer is duplex stainless steel, and the other layer is marine carbon steel;
said duplex stainless steel comprises the following components by weight: C≤0.03%, Mn≤2.00%, Si≤1.00%, Cr: 21.0-23.0%, Ni: 4.5-6.5%, Mo: 2.5-3.5% N: 0.08-0.20%, P≤0.02%, S≤0.025%, and the balance being Fe and inevitable impurities; and
said marine carbon steel comprises the following components by weight: 0.03%≤C≤0.13%, Si≤0.50%, Mn: 0.90-1.60%, P≤0.020%, S≤0.025%, Cu≤0.035%, Cr≤0.20%, Ni≤0.40%, Nb: 0.02-0.05%, Ti≤0.02%, Mo≤0.08%, Al≥0.015%, and the balance being Fe and inevitable impurities.

An interface between the duplex stainless steel and the marine carbon steel of the composite steel plate has a shear strength of 300MPa or more and a bond strength of 320MPa or more; and the composite steel plate has a yield strength of 450MPa or more and a tensile strength of higher than 600MPa.

The marine carbon steel in the composite steel plate is capable of achieving an impact toughness of 120J or more at the temperature of lower than or equal to 40°C below zero.

A manufacturing method of the corrosion-resistant marine composite steel plate provided by the present invention, comprising the following steps:
1) selecting the thicknesses of duplex stainless steel and carbon steel of a combined billet according to the expected thickness ratio of cladding layer and base layer of the clad steel plate; heating and cogging a continuous casting billet of the carbon steel to required size; cleaning the side of the carbon steel to be composited with the duplex stainless steel so as to expose the metal surface completely; and cleaning up the surface oxide scales and pollutants on the duplex stainless steel;
2) directly superposing the cleaned side of carbon steel with the cleaned side of duplex stainless steel, followed by vacuum welding and sealing at a vacuum degree of 0.001 Pa or less, wherein as a first vacuum control, a first vacuum barrier of two independent vacuum billets up and down are formed by carbon steel and duplex stainless steel; then stacking the vacuum billets such that side of duplex stainless steel opposes to side of duplex stainless surface and in symmetry along thickness direction; applying separating agent between the sides of duplex stainless steel surface for isolation; after stacking, welding and sealing at the peripheries of composite billets followed by vacuumizing to obtain a vacuum degree of 0.01 Pa or less, so that a second vacuum barrier is formed and a composite billet of four-layer structure is formed;
3) heating the composite billet with heating temperature controlled to be 1050∼1190°C;
4) rolling the composite billet with an initial rolling temperature of 1040∼1170°C and a final rolling temperature of 850∼1020°C;
5) after rolling, cooling the superposed clad steel plate with compressed air or water, wherein the initial cooling temperature is controlled as 830∼1000°C, the cooling rate is controlled as 5°C/sec∼40°C/sec, and the final cooling temperature is controlled as 250∼750°C; and
6) performing plasma cutting on the head and tail and edges of the rolled and superposed clad steel plate, so that the superposed clad steel plate is separated into two sets of finished clad steel plates in up-down symmetry.

Further, the manufacturing method further comprising tempering thermal treatment with a tempering temperature of 500∼600°C, followed with air cooling treatment. Preferably, in step 4), the pass reduction rate is controlled as 10-25%.

The corrosion-resistant marine composite steel plate provided by the present invention is rolled by adopting four-layer symmetric slab assembly. The two upper and lower layers are the marine carbon steel, and the two middle layers are the duplex stainless steel.

The corrosion-resistant marine composite steel plate simultaneously has various advantages such as high strength, excellent corrosion resistance and good low-temperature impact toughness so as to be suitable for other environments with relatively high requirements on the corrosion resistance in addition to marine construction.

The corrosion-resistant marine composite steel plate provided by the present invention is provided with a duplex stainless steel layer and a carbon steel layer which are compounded by rolling to realize atomic bonding.

In the marine carbon steel layer of the composite steel plate provided by the present invention, the inevitable impurities mainly include elements S and P, wherein it is controllable that P≤0.02%, and S≤0.025%.

All chemical elements in the carbon steel layer of the corrosion-resistant marine composite steel plate provided by the present invention are designed in the following principle:
C: C is an austenite stabilizing element, has a solid solution strengthening effect in steel and is capable of obviously improving the strength of the steel. However, the content of C is overhigh, which is unfavorable to a welding property and toughness and is more liable to increase a hard-phase structure such as a pearlite structure and a martensite-austenite island so as to adversely affect the corrosion resistance of the steel. Therefore, in view of requirements on toughness matching of the steel plate and weldability of a carbon steel material, the content of C in the carbon steel layer is controlled at 0.01-0.18%.
Si: Si is a deoxidizing element; in addition, Si is soluble in a ferrite, has a solid solution strengthening effect and exceeds other alloy elements except C, N and P, and therefore, Si is capable of remarkably improving the strength and hardness of steel. The content of Si in the carbon steel layer is controlled at 0.10-0.5%.
Mn: Mn is capable of delaying pearlitic transformation, reducing a critical cooling rate and improving the hardenability of steel, has a solid solution strengthening effect on the steel and is a main solid solution strengthening element in the steel. However, due to overhigh content of Mn, it is prone to generate a segregation band and a martensitic structure which adversely affect the toughness of the steel, and meanwhile, the corrosion resistance of the steel can also be lowered due to the appearance of the segregation band. The content of Mn in the carbon steel layer is controlled at 0.90-1.60%.
Nb: Nb is an important adding element in microalloyed steel. Nb is easy to form precipitates such as NbN, NbCN and NbC with N and C. In a steel slab heating process, Nb plays a role in refining austenite grains in steel. Nb is capable of greatly raising the temperature of a non-recrystallization region and has relatively obvious effects on rolling control, grain refining and strength and toughness control. Moreover, Nb is capable of forming nano-scale precipitates, which is beneficial to the improvement of the strength. However, mixed crystals are easily caused by adding Nb, excessive Nb adversely affects the toughness, and therefore, the addition amount of Nb is controlled at 0.02-0.05%.
Ti: Ti forms TiC, TiN or TiCN with C and N in steel and At the stage of heating and rolling billet steel, Ti can play a role of refining austenite grains, thereby improving the strength and toughness of steel. However, excessive Ti is capable of forming more thick TiN which is harmful to the strength and toughness of the steel, and therefore, the upper limit of the content of Ti in the carbon steel layer is controlled at 0.02%.
Ni: Ni is only soluble in a ferrite and an austenite serving as matrix phases in steel, does not form carbides, has a very strong austenite stabilizing effect; in addition, the element Ni is also capable of improving the low-temperature toughness of the steel, and therefore, in the technical solutions of the present invention, the addition amount of Ni in the carbon steel layer is controlled within 0.4%.
Cu: Cu mainly exists in steel in a solid solution state and an elementary-phase precipitation state, and Cu in the solid solution state has a solid solution strengthening effect; and the solid solubility of Cu in a ferrite is rapidly lowered with the reduction of a temperature, and therefore, supersaturated Cu in the solid solution state is precipitated in an elementary form at a relatively low temperature to play a role in strengthening precipitation. In addition, due to the addition of a small quantity of Cu in the carbon steel layer, an atmospheric corrosion resistance of the composite steel plate can also be remarkably improved.
Cr: Cr is an element for reducing a phase region of an austenite, is a medium-strong carbide element and is also soluble in a ferrite. Cr is capable of improving the stability of the austenite and enabling a C curve to move rightwards, thereby reducing the critical cooling rate and improving the hardenability of steel. Cr also reduces a transformation temperature of the austenite, so that various formed carbides such as (Fe, Cr)₃C, (Fe, Cr)₇C₃ and (Fe, Cr)₂₃C₇ are precipitated at a relatively low temperature, a structure and the carbides are refined, and the strength and hardness of the steel can be obviously improved, but Cr adversely affects the toughness of the steel. Due to the combination of the above-mentioned factors, according to the technical solutions of the present invention, the content of Cr in the carbon steel layer is controlled within 0.20%.
Mo: Mo is an element for reducing a phase region of an austenite, is capable of improving the hardenability and hot strength of steel and forming a carbide element with an element C and has better tempering resistance. Mo has a solid solution strengthening effect on a ferrite and is also capable of improving the stability of the carbides, thereby improving the strength of the steel. Mo also has good corrosion resistance. In stainless steel, due to the increment of the element Mo, the chloride ion pitting corrosion resistance of the stainless steel can be obviously improved.
Al: Al is a deoxidizing element and is capable of reducing the content of oxygen in molten steel. Moreover, after being combined with N in steel, Al is capable of playing a role in stopping austenite grains from growing.

Further, in the duplex stainless steel composite steel plate provided by the present invention, the cladding layer is made of a material including components within an S31803 component range in ASTM A240.

The corrosion-resistant marine composite steel plate provided by the present invention has the following properties:
Good metallurgical bonding is formed between the stainless steel and the carbon steel layer of the composite steel plate. The interface between the duplex stainless steel and the marine carbon steel of the composite steel plate has a shear strength of 300MPa or more and a bond strength of 320MPa or more; and the composite steel plate has a yield strength of 450MPa or more and a tensile strength of higher than 600MPa.

Due to the design for the components of the carbon steel, the marine carbon steel in the composite steel plate is capable of achieving an impact toughness of 120J or more at the temperature of lower than or equal to 40°C below zero.

The manufacturing method of the corrosion-resistant marine composite steel plate provided by the present invention is described as follows:
A heating temperature of a vacuum assembled composite is controlled at 1050°C -1190°C. In the technical solutions of the present invention, physical properties of the duplex stainless steel and the carbon steel are put into comprehensive consideration in the selection of the heating temperature. On one hand, the better uniform distribution of segregated alloy elements possibly existing in the carbon steel and the duplex stainless steel needs to be guaranteed; and on the other hand, phase distribution and balance control on the phase proportion at a high-temperature stage of the duplex stainless steel needs to be guaranteed.

The vacuum assembled composite slab is rolled, wherein the initial rolling temperature is selected as 1040-1170°C, and the final rolling temperature is selected at 850-1020°C. In order to guarantee plastic deformation of the material in the rolling process, metal atoms on the interface made of a composite form atom diffusion for interpenetration under the action of a sufficient compressive stress, so that the interface can realize interatomic bonding and sufficient deformation, and then, the interface is recrystallized for several times. Preferably, the pass reduction rate is controlled at 10-25%, so that sufficient deformation storage energy is provided for recrystallization or phase transformation.

After rolling, the superimposed composite steel plate is directly cooled in a compressed air or water cooling way, wherein the initial cooling temperature is controlled between 830-1000°C, the cooling speed is 5°C/s-40°C/s, and the final cooling temperature is 250-750°C.

The plasma cutting is performed on the head, tail and sides of the rolled superimposed composite steel plate to separate the superimposed composite steel plate into the two groups of vertically symmetric finished composite steel plates.

The head and tail of the superimposed composite steel plate refer to two ends in a length direction of the superimposed composite steel plate, and the sides refer to two sides in a width direction of the superimposed composite steel plate.

For a composite steel plate with a relatively high requirement on a strength level, a composite slab with a low final cooling temperature (≤300 °C) can be also appropriately matched to adopt tempering heat treatment according to a requirement of a user on a delivery state, and the tempering temperature may be 500-600°C, so that a stress generated by rapidly cooling the material of the base layer is released to achieve better plasticity and toughness; meanwhile, due to the short-time temperature treatment, it can be ensured that the corrosion resistance of the stainless steel serving as the cladding layer is hardly affected. Air cooling treatment is performed after tempering.

The level of the carbon steel in the corrosion-resistant marine composite steel plate provided by the present invention is EH40. Correspondingly, properties of composite steel plates with lower steel levels such as DH, AH, EH36 and EH32 can also meet requirements. The composite steel plate rolled by adopting the technical solutions of the present invention has high bonding capability and the shear strength of 300MPa or more and the bond strength of 320MPa or more.

The stainless steel cladding layer in the composite steel plate can achieve a yield strength of 500MPa or more and a tensile strength of 700MPa or more. A corresponding carbon steel base layer has a yield strength of 420MPa or more and the tensile strength of higher than 530MPa. The composite steel plate has an elongation percentage of higher than 22%, and the toughness on the base layer can be still kept at 120J or more at the temperature of lower than or equal to 40°C below zero.

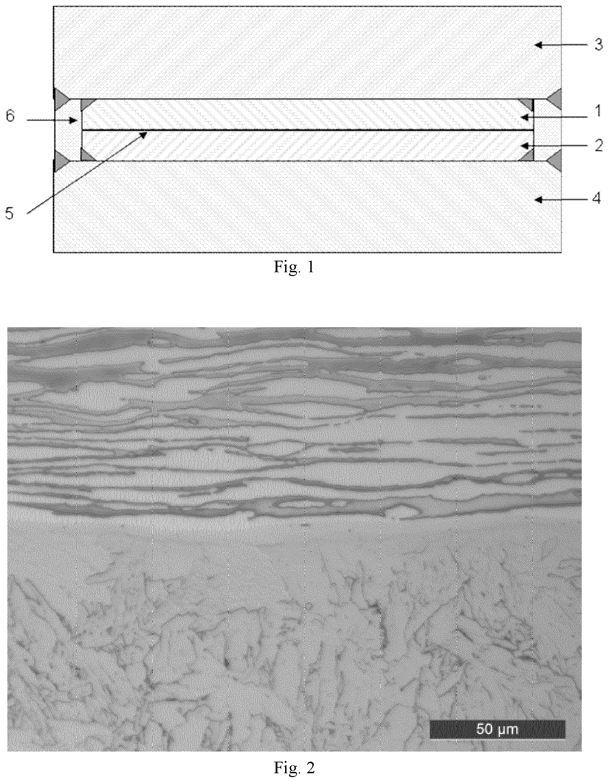

The phase proportion of the duplex stainless steel cladding layer in the composite steel plate manufactured by the manufacturing method provided by the present invention can be controlled at 40-60%. As shown in Fig. 2, a Carl Zeiss optical microscope Axio Imager.M2m is adopted for taking a picture under a 20-fold objective lens. In the picture, the interface is clean and continuous, the phase proportion of a duplex stainless steel structure is balanced, there is not a σ phase, a good proportion of the duplex stainless steel cladding layer to the carbon steel base layer is formed, and the material of the duplex stainless steel cladding layer in the composite steel plate has excellent corrosion resistance. The stainless steel cladding layer has a corrosion rate of 0.00mdd measured according to an ASTM A923 C method, and corrosion is not found from a result of an intergranular corrosion test performed according to an ASTM A262E method.

Compared with the prior art, the present invention has the beneficial effects:
compared with an existing one-time vacuum system method, the vacuum system provided by the present invention adopts a double-vacuum system, that is, the carbon steel and the duplex stainless steel are seal-welded to form a first vacuum system, the vacuum degree is controlled at 0.001Pa or less, and a vacuum slab formed by the carbon steel and the duplex stainless steel which are independent up and down is formed, thereby forming a first vacuum barrier; surfaces of the duplex stainless steels are oppositely stacked, and symmetric stacking is performed in a thickness direction;
a separating agent for separation is brushed between the duplex stainless steel and a surface of the duplex stainless steel, after superimposing, seal welding is performed at the periphery, and then, vacuumizing is performed; and the vacuum degree is controlled at 0.01Pa or less, and a second vacuum barrier is integrally formed by using a four-layer assembled composite slab. Compared with the prior art, the present invention has the following advantages.
   1. By adopting a two-vacuum-barrier rolling method, the vacuum degree can be effectively increased, a higher vacuum degree can be maintained, and a risk of vacuum failure in a storage process can be effectively reduced. The test result shows that the composite steel plate produced in a two-vacuum-system way has a higher and more stable bond strength and an average shear strength improved by 50MPa.
   2. By adopting an existing single-system vacuum slab assembly method, once vacuum failure occurs during slab assembly or rolling, the whole group of composite slab is failed. By adopting the two-vacuum-barrier rolling method in the present invention, a good vacuum system can be still kept in the other vacuum barrier even if a certain vacuum failure occurs in one of the vacuum barriers during slab assembly or rolling, so that a yield of rolling the composite slab can be effectively increased. Due to the high success rate of clad rolling, for the production of a corrosion-resistant alloy composite steel plate which is relatively high in alloy content and relatively expensive, the stability of a production property can be guaranteed, and a high economic benefit can be obtained.

### BRIEF DESCRIPTION OF THE DRAWINGS

Fig. 1 is a sectional view showing a structure of a composite slab of a corrosion-resistant marine composite steel plate provided in an embodiment of the present invention.
Fig. 2 is a picture of a metallographic structure of the corrosion-resistant marine composite steel plate provided in the embodiment of the present invention at a position where a carbon steel layer is bonded with a duplex stainless steel layer.

### DETAILED DESCRIPTION

The marine duplex stainless steel composite steel plate and the manufacturing method therefor provided by the present invention will be further explained and described below in conjunction with the brief description of the drawings and the specific embodiments. However, the explanation and description cannot constitute improper limitations on the technical solutions of the present invention.

Referring to Fig. 1, a composite slab of a corrosion-resistant marine composite steel plate provided by the present invention has a four-layer structure, wherein two middle layers (cladding layer) 1 and 2 are duplex stainless steel; upper and lower layers (base layer) 3 and 4 are marine carbon steel; 5 represents a separating agent; and 6 represents a sealed weld seam.

### Embodiment 1

The carbon steel serving as the base layer adopts EH40 and includes the chemical components (wt%): C: 0.09, Si: 0.25, Mn: 1.30, P: 0.011; S: 0.002, Cr: 0.13, Ni: 0.20, Nb: 0.025, Ti: 0.01. The components (wt%) of the duplex stainless steel are: C: 0.02, Si: 0.25, Mn: 1.25, Cr: 22.53, Ni: 5.45, Mo: 3.08, N: 0.16. Assembled composite slab was performed by adopting a four-layer symmetric separation method as shown in Fig. 1, that is, a carbon steel billet, a duplex stainless steel billet, the other duplex stainless steel billet and the other carbon steel billet are sequentially disposed from top to bottom, wherein the carbon steel billet located on an upper layer and the duplex stainless steel billet corresponding to the carbon steel billet located on the upper layer were sealed in vacuum, and the carbon steel billet located on a lower layer and the duplex stainless steel billet corresponding to the carbon steel billet located on the lower layer were sealed in vacuum, so that two groups of first vacuum systems independent from each other were formed; and a second vacuum system was sealed in vacuum between a first layer and a fifth layer (that is, the carbon steel blillets in the present embodiment) as shown in Fig. 1. A double-vacuum-system assembled composite slab is formed jointly by the two systems. A space located between the duplex stainless steel and a surface of the duplex stainless steel of two groups of vacuum slabs was filled with a separating agent, and then, the vacuumized composite slab was rolled by heating and is cut to form a finished composite steel plate.

Composite rolling was performed, wherein a heating temperature is 1190°C, an initial rolling temperature is 1170°C, and a final rolling temperature is 850°C; after rolling, the composite slab was directly cooled in a water cooling way, wherein an initial cooling temperature is 830°C, a cooling speed is 40°C/s, and a final cooling temperature is 420°C; and then, the composite slab was naturally cooled in air to a room temperature. The composite steel plate which was rolled, separated and cut has a thickness of (4+20) mm, that is, the duplex stainless steel serving as the cladding layer has a thickness of 4 mm, and the carbon steel serving as the base layer has a thickness of 20 mm.

Mechanical properties of the composite steel plate are shown as table 1. In table 1, Rp0.2 represents the yield strength of a full thickness composite steel plate, Rm represents a tensile strength value of the composite steel plate, and A represents an elongation percentage of the composite steel plate during tensile test and reflects comprehensive mechanical properties of materials of the cladding layer and the base layer of the composite steel plate. The carbon steel has relatively obvious low-temperature sensitivity, and therefore, a low-temperature impact test is generally performed on the carbon steel serving as the base layer. As shown in table 1, the composite steel plate has good impact toughness. The shear strength is a mechanical index for evaluating bonding levels of the materials of the cladding layer and the base layer. Shear strength values of three groups of data are all higher than 300MPa. Bond strength values of the three groups of data are higher than 320MPa.

**Table 1. Mechanical Properties of Composite Steel Plate with Thickness of (4+20) mm**

| Tensile properties (cladding layer and base layer of through-thickness composite steel plate) | | Impact energy (carbon steel serving as base layer), J* | | Shear strength, MPa | Bond strength, MPa |
|---|---|---|---|---|---|
| Rp0.2, MPa | 508 | -40°C | 336 | 449 | 458 |
| Rm, MPa | 650 | | 351 | 425 | 472 |
| A, % | 26 | | 324 | 436 | 478 |

| | | | | | |
|---|---|---|---|---|---|
| * is tested by adopting a specimen with a thickness of 10 mm, a width of 10 mm and a length of 55 mm, which conform to standard specifications (the carbon steel serving as the base layer has a thickness of 10 mm). | | | | | |

The corrosion resistance of the cladding layer of the composite steel plate was tested according to an ASTM A923C method, the material of the cladding layer was machined to form a specimen with a length of 50 mm and a width of 25 mm, a surface of the specimen was cleaned, then, the specimen was measured in size and weighed and is then soaked in a 6% FeCl₃ solution with a temperature of 25°Cfor 24 h to perform a corrosion test, and the specimen was weighed after being taken out, cleaned and blow-dried, wherein the weight-loss corrosion of the specimen needs to meet a corrosion requirement that a corrosion rate is not greater than 10mdd. Moreover, an intergranular corrosion test was performed according to an ASTM A262E method, the material of the cladding layer was machined to form two specimens with each having a length of 80 mm and a thickness of 20 mm, surfaces of the specimens were ground, and then, the specimens were sensitized at 675°C for 1 h, were soaked into a boiled sulfuric acid-copper sulfate solution for 15 h, were taken out and are then bent for 180° for testing. A test result is shown as table 2.

**Table 2. Result of Corrosion Test for Cladding layer of Composite Steel Plate with Thickness of (4+20) mm**

| Result of corrosion test for cladding layer | | | | | |
|---|---|---|---|---|---|
| Testing method | Specimen | Corrosion rate * | Testing method | Specimen | Test result |
| ASTM A923 C method 25°C, 24 h | 1 | 0.00mdd | ASTM A262E method (requiring no cracks on an observed surface of 10X after bending) | 1 | No cracks |
| | 2 | 0.00mdd | | 2 | No cracks |

| | | | | | |
|---|---|---|---|---|---|
| * means corrosion weight loss per unit area per unit time. | | | | | |

### Embodiment 2

The carbon steel serving as the base layer adopts EH36 and includes the chemical components (wt%): C: 0.038, Si: 0.24, Mn: 0.91, P: 0.014; S: 0.002, Nb: 0.025, Ti: 0.01. The components (wt%) of the duplex stainless steel are: C: 0.015, Si: 0.25, Mn: 1.25, Cr: 21.03, Ni: 4.52, Mo: 2.55, N: 0.08.

In the present embodiment, an assembled slab was performed by adopting a four-layer symmetric separation method same as that in embodiment 1 according to the above-mentioned component system.

Composite rolling was performed, wherein a heating temperature is 1050°C, an initial rolling temperature is 1040°C, and a final rolling temperature is 850°C; after rolling, the composite slab was directly cooled in a water cooling way, wherein an initial cooling temperature is 830°C, a cooling speed is 20°C/s, and a final cooling temperature is 480°C; and then, the composite slab was naturally cooled in air to a room temperature. The composite steel plate which was rolled, separated and cut has a thickness of (3+10) mm, that is, the duplex stainless steel serving as the cladding layer has a thickness of 3 mm, and the carbon steel serving as the base layer has a thickness of 10 mm.

Mechanical properties of the composite steel plate are shown as table 3. In table 3, Rp0.2 represents a yield strength of a full thickness composite steel plate, Rm represents a tensile strength value of the composite steel plate, and A represents an elongation percentage of the composite steel plate during tensile test and reflects comprehensive mechanical properties of materials of the cladding layer and the base layer of the composite steel plate. The carbon steel has a relatively obvious low-temperature sensitivity, and therefore, a low-temperature impact test is generally performed on the carbon steel serving as the base layer. As shown in table 3, the composite steel plate has a good impact toughness. The shear strength is a mechanical index for evaluating bonding levels of the materials of the cladding layer and the base layer. Shear strength values of three groups of data are all higher than 300MPa. Bond strength values of the three groups of data are higher than 320MPa.

**Table 3. Mechanical Properties of Composite Steel Plate with Thickness of (3+10) mm**

| Tensile properties (cladding layer and base layer of through-thickness composite steel plate) | | Impact energy (carbon steel serving as base layer), J* | | Shear strength, MPa | Bond strength, MPa |
|---|---|---|---|---|---|
| Rp0.2, MPa | 473 | -40°C | 243 | 465 | 433 |
| Rm, MPa | 623 | | 258 | 437 | 459 |
| A, % | 25 | | 231 | 421 | 447 |

| | | | | | |
|---|---|---|---|---|---|
| * is tested by adopting a specimen with a thickness of 10 mm, a width of 10 mm and a length of 55 mm, which conform to standard specifications (the carbon steel serving as the base layer has a thickness of 10 mm). | | | | | |

The corrosion resistance of the cladding layer of the composite steel plate was tested according to an ASTM A923C method, the material of the cladding layer was machined to form a specimen with a length of 50 mm and a width of 25 mm, a surface of the specimen was cleaned, then, the specimen was measured in size and weighed and was then soaked in a 6% FeCl₃ solution with a temperature of 25°Cfor 24 h to perform a corrosion test, and the specimen was weighed after being taken out, cleaned and blow-dried, wherein the weight-loss corrosion of the specimen needs to meet a corrosion requirement that a corrosion rate is not greater than 10mdd. Moreover, an intergranular corrosion test was performed according to an ASTM A262E method, the material of the cladding layer was machined to form two specimens with each having a length of 80 mm and a thickness of 20 mm, surfaces of the specimens were ground, and then, the specimens were sensitized at 675 °C for 1 h, were soaked into a boiled sulfuric acid-copper sulfate solution for 15 h, were taken out and are then bent for 180° for testing. A test result is shown as table 4.

**Table 4. Result of Corrosion Test for Cladding layer of Composite Steel Plate with Thickness of (3+10) mm**

| Result of corrosion test for cladding layer | | | | | |
|---|---|---|---|---|---|
| Testing method | Specimen | Corrosion rate * | Testing method | Specimen | Test result |
| | 1 | 0.00mdd | ASTM A262E method (requiring no cracks on an observed surface of 10X after bending) | 1 | No cracks |
| ASTM A923 C method | 2 | 0.00mdd | | 2 | No cracks |
| 25°C, 24h | | | | | |

| | | | | | |
|---|---|---|---|---|---|
| * means corrosion weight loss per unit area per unit time. | | | | | |

### Embodiment 3

The carbon steel serving as the base layer adopts EH36 and includes the chemical components (wt%): C: 0.13, Si: 0.26, Mn: 1.59, P: 0.015; S: 0.002, Nb: 0.02, Ti: 0.01. The components (wt%) of the duplex stainless steel are: C: 0.03, Si: 0.25, Mn: 1.75, Cr: 22.95, Ni: 6.47, Mo: 3.50, N: 0.20.

In the present embodiment, slab assembly was performed by adopting a four-layer symmetric separation method same as that in embodiment 1 according to the above-mentioned component system.

Composite rolling was performed, wherein a heating temperature is 1160°C, an initial rolling temperature is 1130°C, and a final rolling temperature is 1000°C; after rolling, the composite slab was cooled in a compressed air cooling way, wherein an initial cooling temperature is 980 °C, a cooling speed is 5°C/s, and a final cooling temperature is 750°C; and then, the composite slab was naturally cooled in air to a room temperature. The composite steel plate which was rolled, separated and cut has a thickness of (2+8) mm, that is, the duplex stainless steel serving as the cladding layer has a thickness of 2 mm, and the carbon steel serving as the base layer has a thickness of 8 mm.

Mechanical properties of the composite steel plate are shown as table 5. In table 5, Rp0.2 represents the yield strength of a through-thickness composite steel plate, Rm represents a tensile strength value of the composite steel plate, and A represents an elongation percentage of the composite steel plate during tensile test and reflects comprehensive mechanical properties of materials of the cladding layer and the base layer of the composite steel plate. The carbon steel has relatively obvious low-temperature sensitivity, and therefore, a low-temperature impact test is generally performed on the carbon steel serving as the base layer. As shown in table 5, the composite steel plate has good impact toughness. The shear strength is a mechanical index for evaluating bonding levels of the materials of the cladding layer and the base layer. Shear strength values of three groups of data are all higher than 300MPa. Bond strength values of the three groups of data are higher than 320MPa.

**Table 5. Mechanical Properties of Composite Steel Plate with Thickness of (2+8) mm**

| Tensile properties (cladding layer and base layer of through-thickness composite steel plate) | | Impact energy (carbon steel serving as base layer), J* | | Shear strength, MPa | Bond strength, MPa |
|---|---|---|---|---|---|
| Rp0.2, MPa | 468 | -40°C | 129 | 417 | 425 |
| Rm, MPa | 634 | | 134 | 429 | 441 |
| A, % | 25 | | 138 | 443 | 453 |

| | | | | | |
|---|---|---|---|---|---|
| * is tested by adopting a specimen with a thickness of 7.5 mm, a width of 10 mm and a length of 55 mm (the carbon steel serving as the base layer has a thickness of 7.5 mm). | | | | | |

The corrosion resistance of the cladding layer of the composite steel plate was tested according to an ASTM A923C method, the material of the cladding layer was machined to form a specimen with a length of 50 mm and a width of 25 mm, a surface of the specimen was cleaned, then, the specimen was measured in size and weighed and is then soaked in a 6% FeCl₃ solution with a temperature of 25 °C for 24 h to perform a corrosion test, and the specimen was weighed after being taken out, cleaned and blow-dried, wherein the weight-loss corrosion of the specimen needs to meet a corrosion requirement that a corrosion rate is not greater than 10mdd. Moreover, an intergranular corrosion test was performed according to an ASTM A262E method, the material of the cladding layer was machined to form two specimens with each having a length of 80 mm and a thickness of 20 mm, surfaces of the specimens were ground, and then, the specimens were sensitized at 675 °C for 1 h, were soaked into a boiled sulfuric acid-copper sulfate solution for 15 h, were taken out and were then bent for 180° for testing. A test result is shown as table 6.

**Table 6. Result of Corrosion Test for Cladding layer of Composite Steel Plate with Thickness of (2+8) mm**

| Result of corrosion test for cladding layer | | | | | |
|---|---|---|---|---|---|
| Testing method | Specimen | Corrosion rate * | Testing method | Specimen | Test result |
| | 1 | 0.00mdd | ASTM A262E method (requiring no cracks on an observed surface of 10X after bending) | 1 | No cracks |
| ASTM A923 C method | 2 | 0.00mdd | | 2 | No cracks |
| 25°C, 24 h | | | | | |

| | | | | | |
|---|---|---|---|---|---|
| * means corrosion weight loss per unit area per unit time. | | | | | |

### Embodiment 4

The carbon steel serving as the base layer adopts EH40 and includes the chemical components (wt%): C: 0.07, Si: 0.25, Mn: 1.50, P: 0.013; S: 0.002, Cr: 0.10, Ni: 0.10, Nb: 0.03, Ti: 0.01. The components (wt%) of the duplex stainless steel are: C: 0.02, Si: 0.25, Mn: 1.20, Cr: 22.72, Ni: 5.41, Mo: 3.13, N: 0.16. In the present embodiment, slab assembly was performed by adopting a four-layer symmetric separation method same as that in embodiment 1 according to the above-mentioned component system.

Composite rolling was performed, wherein a heating temperature is 1180°C, an initial rolling temperature is 1150°C, and a final rolling temperature is 1020°C; after rolling, the composite slab was directly cooled in a water cooling way, wherein an initial cooling temperature is 1000°C, a cooling speed is 40°C/s, and a final cooling temperature is 250°C; and then, the composite slab was naturally cooled in air to a room temperature. Next, the composite slab was tempered at the temperature of 550°C for 1 h, was then taken out of a furnace and was air-cooled to a room temperature. The composite steel plate which was rolled, separated and cut has a thickness of (3+12) mm, that is, the duplex stainless steel serving as the cladding layer has a thickness of 3 mm, and the carbon steel serving as the base layer has a thickness of 12 mm. Mechanical properties of the composite steel plate are shown as table 7. In table 7, Rp0.2 represents the yield strength of a through-thickness composite steel plate, Rm represents a tensile strength value of the composite steel plate, and A represents an elongation percentage of the composite steel plate during tensile test and reflects comprehensive mechanical properties of materials of the cladding layer and the base layer of the composite steel plate. The carbon steel has relatively obvious low-temperature sensitivity, and therefore, a low-temperature impact test is generally performed on the carbon steel serving as the base layer. As shown in table 7, the composite steel plate has good impact toughness. The shear strength is a mechanical index for evaluating bonding levels of the materials of the cladding layer and the base layer. Shear strength values of three groups of data are all higher than 300MPa. Bond strength values of the three groups of data are higher than 320MPa.

**Table 7. Mechanical Properties of Composite Steel Plate with Thickness of (3+12) mm**

| Tensile properties (cladding layer and base layer of through-thickness composite steel plate) | | Impact energy (carbon steel serving as base layer), J* | | Shear strength, MPa | Bond strength, MPa |
|---|---|---|---|---|---|
| Rp0.2, MPa | 524 | -40°C | 263 | 468 | 495 |
| Rm, MPa | 660 | | 245 | 476 | 482 |
| A, % | 26 | | 259 | 432 | 485 |

| | | | | | |
|---|---|---|---|---|---|
| * is tested by adopting a specimen with a thickness of 10 mm, a width of 10 mm and a length of 55 mm, which conform to standard specifications (the carbon steel serving as the base layer has a thickness of 10 mm). | | | | | |

The corrosion resistance of the cladding layer of the composite steel plate was tested according to an ASTM A923C method, the material of the cladding layer was machined to form a specimen with a length of 50 mm and a width of 25 mm, a surface of the specimen was cleaned, then, the specimen was measured in size and weighed and was then soaked in a 6% FeCl₃ solution with a temperature of 25°Cfor 24 h to perform a corrosion test, and the specimen was weighed after being taken out, cleaned and blow-dried, wherein the weight-loss corrosion of the specimen needs to meet a corrosion requirement that a corrosion rate is not greater than 10mdd. Moreover, an intergranular corrosion test was performed according to an ASTM A262E method, the material of the cladding layer was machined to form two specimens with each having a length of 80 mm and a thickness of 20 mm, surfaces of the specimens were ground, and then, the specimens were sensitized at 675°C for 1 h, were soaked into a boiled sulfuric acid-copper sulfate solution for 15 h, were taken out and were then bent for 180° for testing. A test result is shown as table 8.

**Table 8. Result of Corrosion Test for Cladding layer of Composite Steel Plate with Thickness of (3+12) mm**

| Result of corrosion test for cladding layer | | | | | |
|---|---|---|---|---|---|
| Testing method | Specimen | Corrosion rate * | Testing method | Specimen | Test result |
| | 1 | 0.00mdd | ASTM A262E method (requiring no cracks on an observed surface of 10X after bending) | 1 | No cracks |
| ASTM A923 C method | 2 | 0.00mdd | | 2 | No cracks |
| 25°C, 24 h | | | | | |

| | | | | | |
|---|---|---|---|---|---|
| * means corrosion weight loss per unit area per unit time. | | | | | |

### Comparative example

A contrast test was performed by adopting the same carbon steel and stainless steel materials as those in embodiment 2.

The carbon steel serving as the base layer adopts EH36 and includes the chemical components (wt%): C: 0.038, Si: 0.24, Mn: 0.91, P: 0.014; S: 0.002, Nb: 0.025, Ti: 0.01. The components (wt%) of the duplex stainless steel are: C: 0.015, Si: 0.25, Mn: 1.25, Cr: 21.03, Ni: 4.52, Mo: 2.55, N: 0.08.

In the present comparative example, an assembled slab was performed by adopting a common four-layer symmetric separation method according to the above-mentioned component system, that is, a single-vacuum system. A carbon steel billet, a duplex stainless steel billet, the other duplex stainless steel billet and the other carbon steel billet were sequentially disposed from top to bottom, and a separating agent was brushed between the duplex stainless steel and a surface of the duplex stainless steel; and then, the four layers of slabs were seal-welded at one time to form an independent vacuum system. The method is higher in slab assembly efficiency and is capable of guaranteeing one vacuum system by virtue of a weld seam.

In order to make a comparison, a rolling process provided in the comparative example is kept consistent with that in embodiment 2. Composite rolling was performed, wherein a heating temperature is 1050°C, an initial rolling temperature is 1040°C, and a final rolling temperature is 850°C; after rolling, the composite slab was directly cooled in a water cooling way, wherein an initial cooling temperature is 830°C, a cooling speed is 20°C/s, and a final cooling temperature is 480°C; and then, the composite slab was naturally cooled in air to a room temperature. The composite steel plate which was rolled, separated and cut has a thickness of (3+10) mm, that is, the duplex stainless steel serving as the cladding layer has a thickness of 3 mm, and the carbon steel serving as the base layer has a thickness of 10 mm.

Mechanical properties of the composite steel plate are shown as table 9. In table 9, Rp0.2 represents the yield strength of a full thickness composite steel plate, Rm represents a tensile strength value of the composite steel plate, and A represents an elongation percentage of the composite steel plate during tensile test and reflects comprehensive mechanical properties of materials of the cladding layer and the base layer of the composite steel plate. The carbon steel has relatively obvious low-temperature sensitivity, and therefore, a low-temperature impact test is generally performed on the carbon steel serving as the base layer. As shown in table 9, the composite steel plate in the comparative example has good impact toughness close to that in embodiment 2. Seen by comparison, the shear strength and bond strength for representing comprehensive properties of the composite steel plate are lower than those in embodiment 2, and the shear strength changes greatly. Due to the adoption of the production process as that in embodiment 2, the stainless steel in the comparative example also has a good corrosion resistance, as shown in table 10.

**Table 9. Mechanical Properties of Composite Steel Plate with Thickness of (3+10) mm**

| Tensile properties (cladding layer and base layer of through-thickness composite steel plate) | | Impact energy (carbon steel serving as base layer), J* | | Shear strength, MPa | Bond strength, MPa |
|---|---|---|---|---|---|
| Rp0.2, MPa | 486 | -40°C | 253 | 394 | 382 |
| Rm, MPa | 631 | | 226 | 403 | 379 |
| A, % | 24 | | 235 | 256 | 354 |

| | | | | | |
|---|---|---|---|---|---|
| * is tested by adopting a specimen with a thickness of 10 mm, a width of 10 mm and a length of 55 mm, which conform to standard specifications (the carbon steel serving as the base layer has a thickness of 10 mm). | | | | | |

**Table 10. Result of Corrosion Test for Cladding layer of Composite Steel Plate with Thickness of (3+10) mm**

| Result of corrosion test for cladding layer | | | | | |
|---|---|---|---|---|---|
| Testing method | Specimen | Corrosion rate * | Testing method | Specimen | Test result |
| | 1 | 0.00mdd | ASTM A262E method (requiring no cracks on an observed surface of 10X after bending) | 1 | No cracks |
| ASTM A923 C method | 2 | 0.00mdd | | 2 | No cracks |
| 25°C, 24 h | | | | | |

| | | | | | |
|---|---|---|---|---|---|
| * means corrosion weight loss per unit area per unit time. | | | | | |

**Table 11. Comparison of Rolling Situations of Assembled Slabs Realized by Adopting Conventional Assembly Process and Assembly Process Provided by Present Invention**

| Process | Number of slabs in test group | Number of successfully rolled slabs | Rolling success rate |
|---|---|---|---|
| Conventional process | 5 | 3 | 60% |
| Assembled process provided by present invention | 40 | 40 | 100% |

As shown in table 11 in which rolling situations of assembled slabs realized by adopting a conventional assembly process and an assembly process provided in the present solution, a relatively expensive corrosion-resistant alloy composite steel plate such as duplex stainless steel is rolled by adopting a two-vacuum-barrier rolling method, there are 9 groups of slabs in a test group, the 9 groups of slabs are successfully rolled, and therefore, the success rate of rolling reaches 100%. It can be seen from the rolling success rate of the assembled slabs that the rolling success rate achieved by adopting the assembly process provided by the present invention is remarkably increased as comparison with that achieved by using a conventional assembly process. The conventional assembly process is a vacuum slab assembly method for wholly seal-welding a single system at one time, and the assembly process is high in vacuum control process requirement, likely to result in rolling failure and slightly low in yield. The assembly solution of the present invention is realized by using a four-layer symmetric separation method, that is, a double-vacuum system is adopted, so that the rolling reliability can be greatly improved. In combination with the comparison of the rolling situations of assembled slabs in the embodiments of the present invention and the comparative example in table 11, the bond property of the composite steel plate provided by the assembly solution of the present invention is higher and more stable.

## Claims

1. A corrosion-resistant marine composite steel plate, which has a two-layer structure, wherein one layer is duplex stainless steel, and the other layer is marine carbon steel;
said duplex stainless steel comprises the following components by weight: C≤0.03%, Mn≤2.00%, Si≤1.00%, Cr: 21.0-23.0%, Ni: 4.5-6.5%, Mo: 2.5-3.5%, N: 0.08-0.20%, P≤0.02%, S≤0.025%, and the balance being Fe and inevitable impurities; and
said marine carbon steel comprises the following components by weight: 0.03%≤C≤0.13%, Si≤0.50%, Mn: 0.90-1.60%, P≤0.020%, S≤0.025%, Cu≤0.035%, Cr≤0.20%, Ni≤0.40%, Nb: 0.02-0.05%, Ti≤0.02%, Mo≤0.08%, Al≥0.015%, and the balance being Fe and inevitable impurities.

2. The corrosion-resistant marine composite steel plate according to claim 1, wherein an interface between the duplex stainless steel and the marine carbon steel of the composite steel plate has a shear strength of 300MPa or more and a bond strength of 320MPa or more; and the composite steel plate has a yield strength of 450MPa or more and a tensile strength of higher than 600MPa.

3. The corrosion-resistant marine composite steel plate according to claim 1 or 2, wherein the marine carbon steel in the composite steel plate is capable of achieving an impact toughness of 120J or more at the temperature of lower than or equal to 40°C below zero.

4. A manufacturing method of the corrosion-resistant marine composite steel plate according to any one of claims 1-3, comprising the following steps:
1) selecting the thicknesses of duplex stainless steel and carbon steel of a combined billet according to the expected thickness ratio of cladding layer and base layer of the clad steel plate; heating and cogging a continuous casting billet of the carbon steel to required size; cleaning the side of the carbon steel to be composited with the duplex stainless steel so as to expose the metal surface completely; and cleaning up the surface oxide scales and pollutants on the duplex stainless steel;
2) directly superposing the cleaned side of carbon steel with the cleaned side of duplex stainless steel, followed by vacuum welding and sealing at a vacuum degree of 0.001 Pa or less, wherein as a first vacuum control, a first vacuum barrier of two independent vacuum billets up and down are formed by carbon steel and duplex stainless steel; then stacking the vacuum billets such that side of duplex stainless steel opposes to side of duplex stainless surface and in symmetry along thickness direction; applying separating agent between the sides of duplex stainless steel surface for isolation; after stacking, welding and sealing at the peripheries of composite billets followed by vacuumizing to obtain a vacuum degree of 0.01 Pa or less, so that a second vacuum barrier is formed and a composite billet of four-layer structure is formed;
3) heating the composite billet with heating temperature controlled to be 1050∼1190°C;
4) rolling the composite billet with an initial rolling temperature of 1040∼1170°C and a final rolling temperature of 850∼1020°C;
5) after rolling, cooling the superposed clad steel plate with compressed air or water, wherein the initial cooling temperature is controlled as 830∼1000°C, the cooling rate is controlled as 5°C/sec∼40°C/sec, and the final cooling temperature is controlled as 250∼750°C; and
6) performing plasma cutting on the head and tail and edges of the rolled and superposed clad steel plate, so that the superposed clad steel plate is separated into two sets of finished clad steel plates in up-down symmetry.

5. The manufacturing method of the corrosion-resistant marine composite steel plate according to claim 4, the manufacturing method further comprising tempering thermal treatment with a tempering temperature of 500∼600°C, followed with air cooling treatment.

6. The manufacturing method of the corrosion-resistant marine composite steel plate according to claim 4, wherein, in step 4), the pass reduction rate is controlled as 10-25%
